# EUROPEAN PATENT SPECIFICATION

(11) **EP 2 934 274 B1**
(45) Date of publication and mention of the grant of the patent: **01.02.2017**
(21) Application number: 13820986.1
(22) Date of filing: 18.12.2013
(51) Int. Cl.: A47L 15/42, A47L 15/48

(54) **HYDRAULIC RECOVERY CIRCUIT FOR RECOVERING THE WASHING LIQUID OF A WASHING AND/OR DRYING DEVICE**
HYDRAULISCHE RÜCKGEWINNUNGSSCHALTUNG ZUR RÜCKGEWINNUNG DER WASCHFLÜSSIGKEIT BEI EINER WASCH- UND/ODER TROCKNERVORRICHTUNG
CIRCUIT DE RÉCUPÉRATION HYDRAULIQUE PERMETTANT DE RÉCUPÉRER LE LIQUIDE DE LAVAGE D'UN DISPOSITIF DE LAVAGE ET/OU DE SÉCHAGE

(30) Priority: 21.12.2012 IT TO20121121
(43) Date of publication of application: 28.10.2015
(73) Proprietor: BITRON S.p.A., 10122 Torino (IT)
(72) Inventor: BRIGNONE, Enzo, I-12025 Dronero CN (IT)
(74) Representative: Vitillo, Giuseppe
(86) International application number: PCT/IB2013/061062
(87) International publication number: WO 2014/097157

(56) References cited:
- WO-A1-2006/042777
- FR-A1- 2 037 198

## Description

The present invention concerns a dishwasher provided with a hydraulic recovery circuit to recover the washing liquid used in the washing cycles of the dishwasher.

The hydraulic circuits for the recovery of washing liquid, applied to dishwashers comprise storage containers, which are used to reduce water consumption during the execution of the washing or drying programs.

See for instance document FR 2 037 198, which discloses a dishwasher according to the preamble of claim 1.

In particular, there are dishwashers that are provided with a container to store the washing liquid, for example water, used during the last rinse step. The liquid stored in the container is used during the following washing cycle, for example during the first rinse step.

There are washing liquid recovery circuits, comprising at least one storage container, in which the liquid is fed to the container using the pressure generated by a pump, for example a washing pump comprised in a hydraulic washing system. Said container comprises a closing valve, which is normally controlled by a wax actuator or by a coil. This closing valve, in the open operating configuration, allows the container to be filled with or emptied from the liquid. In the hydraulic circuits for liquid recovery a pump needs to be used during the loading step, for example a washing pump comprised in the hydraulic washing system. The closing valve, in the closed operating configuration, is adapted to keep the liquid in the container and prevent the latter from filling any further.

Furthermore, there are other embodiments of the container, in which the washing liquid is fed to the container using a diverter assembly, which is normally comprised in the dishwasher and it is normally adapted to feed the water or the washing liquid to the lower and/or upper impeller. In all the embodiments described above, the container is arranged at a higher level relative to the maximum level that the washing water can reach inside a washing chamber; furthermore, the container is provided with a vent valve, which is hydraulically connected to the inside of the washing tank so that, if the quantity of water available in the washing tank exceeds the capacity of the container, said water flows back to washing tank through the vent valve.

All the solutions of the prior art use the pressure generated by the washing pump to allow the container to be filled.

Furthermore, all the solutions of the prior art provide, between the pump and the container, a valve element, namely said closing valve, adapted to open or close as the liquid flows by, so as load or drain the washing liquid into or from the container itself.

A technical problem that can arise in the solutions of the prior art is that the closing valve and the actuator associated therewith, which are adapted to control the loading and the draining of the liquid into and from the container, operate in the washing liquid recovery circuit. The washing liquid recovered comprises suspended residues and is normally called dirty liquid or dirty water. Dirty water can contain foreign bodies, which can jeopardize the seal of the closing valve itself.

In the embodiment of the prior art described above, the container must be designed so as to stand the pressure of the pump, in particular of the washing pump, since, in case of obstruction of the channels, the container is directly subject to the pressure generated by the pump.

For safety purposes, the solutions of the prior art require the washing liquid storage container to be hydraulically connected to the washing tank, besides the connection obtained by means of the washing liquid recovery circuit.

Finally, it should be pointed out that in the solutions of the prior art, in case there are sealing problems of the closing valve, the liquid contained in the container won't remain in the container and will fall back into the washing chamber.

Furthermore, the washing liquid storage container is normally arranged at a higher level than the washing sump and, in particular, is parallel to the washing chamber.

The object of the present invention is to provide a hydraulic recovery circuit for the recovery of washing liquid comprising a storage container, which is adapted to hold the washing liquid used during previous washing cycles. The container is such that the sealing valve of the container is not in contact with dirty liquid or water that might jeopardize the seal of the container and of the hydraulic recovery circuit itself.

The present invention is going to solve the technical problems mentioned above by providing a hydraulic recovery circuit comprising a washing liquid storage container able to solve the technical problems described above.

The present invention solves these problems by providing a dishwasher having the features set forth in appended claim 1.

Further accessory features are set forth in the appended dependent claims.

The features and advantages of the dishwasher according to the present invention will be best understood upon perusal of the following detailed description of at least one embodiment of the dishwasher according to the present invention with reference to the accompanying drawings, which respectively show what follows:
- figure 1 shows, in a schematic representation, the state of the art of a washing device comprising a washing liquid recovery circuit comprising a storage container;
- figure 2 shows, in a schematic representation, a washing device comprising a washing liquid recovery circuit comprising a storage container according to the present invention;
- figures 3A and 3B show liquid flows in the washing liquid recovery circuit of figure 2; in particular, figure 3A shows the liquid flow in the storage container loading step, and figure 3B shows the liquid flow in the storage container draining step.

With reference to the figures mentioned above, the hydraulic recovery circuit "C" for the recovery of washing liquid in a washing and/or drying device comprises: at least one storage container 3, which is adapted to hold the washing liquid recovered.

The storage container comprises at least one opening 30, through which the liquid flows into and out of container 3 itself.

Hydraulic recovery circuit "C" comprises, furthermore, at least one pump 5, downstream of which there is connected a hydraulic washing circuit "W" of said washing and/or drying device. Said pump 5, during a draining step of hydraulic recovery circuit "C", is adapted to lead the liquid contained in a container 3 towards said hydraulic washing circuit "W", thus at least partially emptying container 3.

Said recovery circuit "C" is hydraulically connected to at least one sump 21, where the washing liquid to be recovered arrives.

Said at least one container 3 is hydraulically connected to said sump 21 so as collect and contain the liquid coming, for example falling, from said sump 21. In particular, the hydraulic connection between said at least one container 3 and said sump 21 is direct, which means that closing devices, such as valves, arranged along the connection line itself are preferably not provided.

Said at least one container 3 is connected upstream of washing pump 5, so as to the allow container 3 to be at least partially emptied using pump 5 itself.

Said opening 30 comprised in the storage container is preferably arranged in the lower portion, in use, of storage container 3 itself.

Said container 3 comprises at least one vent element 31, preferably a vent valve 31.

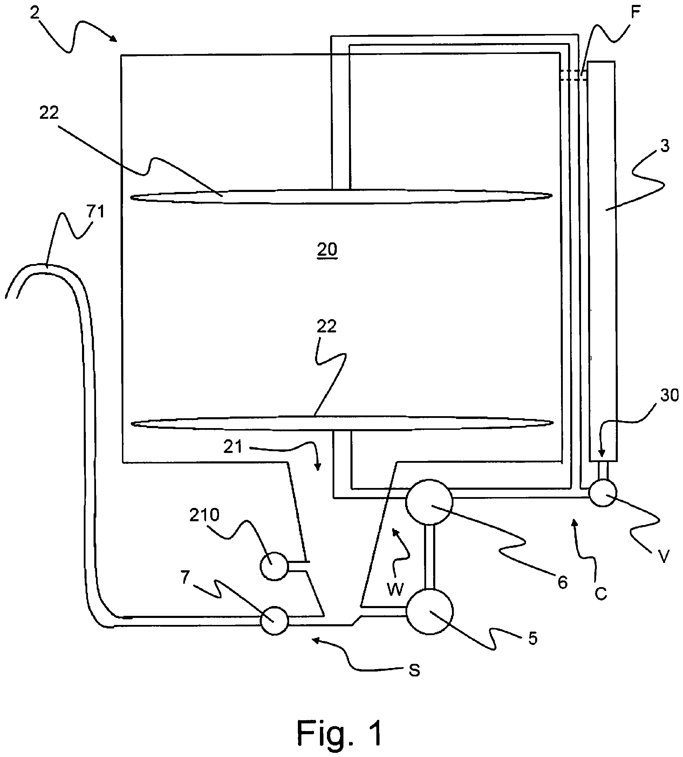

Said at least one vent element, preferably a vent valve 31, is electronically controlled, thus becoming the only element adapted to determine the possibility to load or drain container 3 with or from the washing liquid. As a matter of fact, the solutions of the prior art comprise a "V" closing valve, which is controlled by means of a wax actuator and is adapted to open and close said opening 30, as shown in figure 1.

Said at least one vent element 31, preferably a vent valve 31, in a first open operating configuration, is adapted to allow said storage container 3 to be at least partially filled and/or emptied and, in a closed operating configuration, is adapted to prevent container 3 itself from being even partially emptied and/or filled.

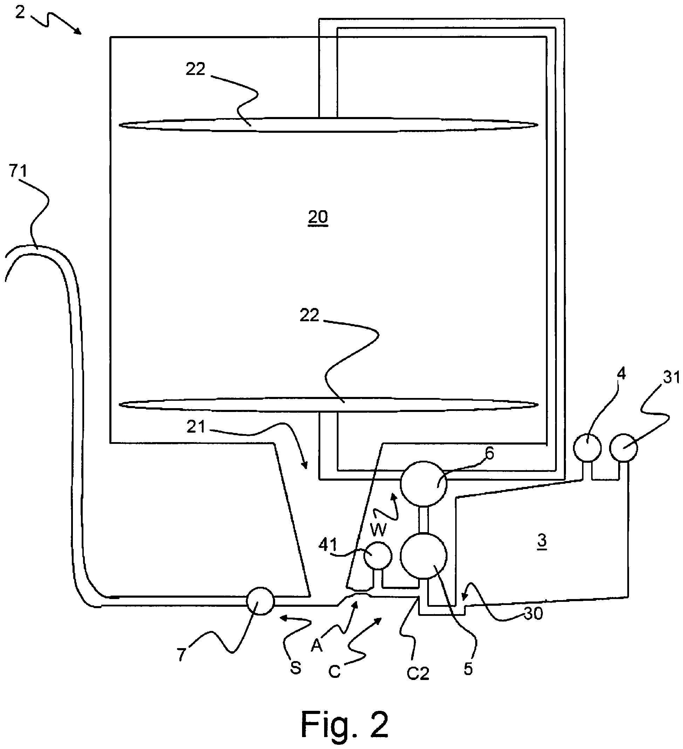

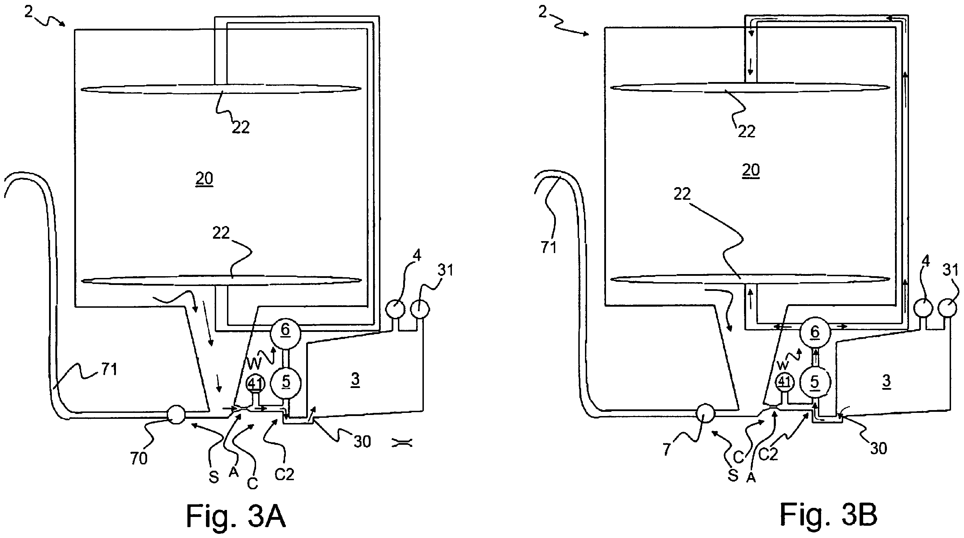

In general, said at least one vent element 31 is connected, in use, to the upper end of the container itself. Preferably, said vent element is arranged at the upper end of the container itself, as shown in figures 2, 3A, and 3B.

Said at least one vent element 31, preferably a vent valve 31, is adapted to control the filling and/or the emptying of container 3.

In general, said vent element 31, which is electronically controlled, in the open operating configuration allows the container to be filled and/or emptied by means of said opening 30.

Said at least one vent element 31, in the closed operating configuration, ensures that container 3 cannot be filled with the washing liquid, thus preventing the liquid from flowing into container 3 itself. As a matter of fact, the air contained in container 3 cannot flow out and, as a consequence, the liquid cannot take over this volume.

Furthermore, in the closed operating configuration, when storage container 3 holds the liquid on the inside, a pressure drop in recovery circuit "C", for example generated by pump 5, is not able to extract the liquid itself from container 3; in this operating configuration, container 3 keeps the washing liquid on the inside.

In the preferred embodiment, said storage container 3 has the shape of a rectangular parallelepiped, as one can assume from the accompanying drawings.

As mentioned above, the position of vent valve 31 in the upper portion of container 3 prevents the valve itself from coming into contact with the washing liquid recovered. Indeed, in recovery container 3 according to the present invention, the washing liquid recovered never comes into contact with vent valve 31. In the prior art, the liquid flows through a "V" closing valve, which is arranged right in correspondence to liquid inlet/outlet opening 30, as clearly shown in figure 1.

With reference to figure 1, the solutions of the prior art require storage container 3 to be hydraulically connected, by means of a hydraulic connection "F", to a washing chamber 20 of a washing device. Said hydraulic connection "F" substantially works as a relief element, so as to avoid an overfilling of storage container 3.

In container 3 according to the present invention, the washing liquid never flows through vent valve 31 and there is no need for a "V" closing valve in correspondence to inlet/outlet opening 30 of container 3.

In the preferred embodiment, storage container 3 comprises at least one first sensor 4, which is adapted to detect the presence of liquid in container 3. More preferably, said first sensor 4 is a pressure sensor.

In general, as shown in figures 2, 3A, and 3B, the first sensor 4 is arranged in the upper portion of container 3 itself, for example it is arranged close to said vent element 31, preferably a vent valve 31.

A control circuit, which is not shown, is adapted to control said vent element 31, preferably a vent valve 31, according to a suitable washing program, which properly stored in a non-volatile memory medium. The control circuit is operatively connected to said first sensor 4 so as to detect the presence of liquid in container 3 or the lack thereof and switch the vent element or valve 31 to an open or closed configuration as a function of the needs and/or the data detected by the first sensor 4.

Said control circuit could be the general control circuit that controls and manages hydraulic recovery circuit "C" and/or the entire washing device in which hydraulic recovery circuit "C" is applied.

In the prior art, as shown in figure 1, the sump comprises a sump sensor 210, which is adapted to detect the presence of liquid in the sump itself, so as to allow storage container 3 to be filled.

In general, the hydraulic recovery circuit "C" for the recovery of washing liquid is adapted to be applied to a washing and/or drying device, such as a dishwasher 2.

As mentioned above, a hydraulic washing circuit "W" of said washing and/or drying device is connected downstream of pump 5.

Said pump 5, during a draining step of recovery circuit "C", is adapted to lead the washing liquid contained in said storage container 3 towards said hydraulic washing circuit "W". In particular, said pump 5 is hydraulically connected to said at least one opening 30 of storage container 3 by means of a duct, as shown in figures 2 and 3B.

Preferably, said pump 5 is a washing pump comprised in hydraulic washing circuit "W" itself.

As mentioned above, washing liquid recovery circuit "C" is hydraulically connected to said at least one sump 21, which is comprised in the washing device. In particular, said sump 21 is hydraulically connected to said at least one opening 30 of storage container 3 by means of a duct, as shown in figures 2 and 3A.

The washing liquid that can be recovered reaches said sump 21. Said recoverable liquid derives from the washing liquid used during a previous washing step.

Sump 21 is hydraulically connected to a hydraulic draining circuit "S", which comprises at least one draining pump 7 and a draining circuit 71 and is adapted to drain the excess washing liquid and/or the washing liquid that cannot be recovered. Said draining duct 71 is, for example, a hose, which, at one end, is connected to draining pump 7. Said draining pump 7 preferably has technical features, such as the power, that are lower than those of pump 5, which, for example, is also used in hydraulic washing circuit "W".

During the loading step performed to load storage container 3, container 3 itself is hydraulically connected downstream of said sump 21 so as collect and contain the liquid coming, for example falling, from said sump 21.

During the draining step performed to drain storage container 3, said at least one container 3 is preferably hydraulically connected, furthermore, upstream of washing pump 5, as shown in figure 3B.

Storage container 3, since it is hydraulically arranged upstream of pump 5, is not subject to the pressure of pump 5 itself. The arrangement of storage container 3, as shown in the figures, causes pump 5 not to be needed in the loading step, since the liquid of sump 21 reaches container 3 by falling. For this reason, the costs to manufacture container 3 are reduced, since container 3 does not necessarily have to be suited to stand the pressure generated by pump 5.

In order to allow storage container 3 comprised in hydraulic recovery circuit "C" to be connected, between hydraulic draining circuit "S" and hydraulic washing circuit "W" there is provided a three-way fitting "C2", ad clearly shown in figures 2, 3A, and 3B. Said three-way fitting "C2" is connected, at a first way, to sump 21 and, as a consequence, to the draining circuit. Preferably, the first way of said three-way fitting "C2" is connected to sump 21 by means of a section reducing element "A" or narrowing. The second way of fitting "C2" is connected to the inlet of pump 5. The third way of fitting "C2" is connected to said opening 30 of te storage container 3.

In general, said vent element 31, preferably a vent valve 31, according to the present invention is electronically controlled, thus allowing container 3, in its open operating configuration, to be filled and emptied. In the preferred embodiment shown in figures 2, 3A, and 3B, one can clearly see that pump 5 is not involved in the loading step performed to load container 3, since the liquid of sump 21 reaches storage container 3 itself by falling therein.

Furthermore, as shown in figure 3B, the pump is hydraulically arranged upstream of container 3, so as to allow the washing liquid to be drawn from container 3, when vent element 31, and in particular vent valve 31, is in the open operating configuration.

Container 3 is preferably arranged in parallel to sump 21, thus using the principle of the communicating vessels. By using the principle of the communicating vessels, storage container 3 can be filled with falling liquid.

In circuit "C" according to the present invention, vent element 31, in particular a vent valve 31, is the only element suited to control the filling or the emptying of container 3. Since said element or valve 31 is electronically controlled, in the open operating configuration it allows container 3 to be filled. For example, the container is filled, if the quantity of liquid contained in container 3 is at a lower level relative to the liquid contained in sump 21 and, preferably, is pump 5 is deactivated. Draining pump 7, furthermore, is preferably deactivated.

In the open operating configuration of the vent element, for example a vent valve 31, the element itself allows the washing liquid to be drained from container 3. The emptying takes place when the pump is activated. If necessary, the emptying of container 3 can be carried out by means of draining pump 7 and of hydraulic draining circuit "S", instead of using the washing liquid recovered in another washing program. As shown in figure 1, this option is not taken into account in the prior art, which provides for the emptying of container 3 to be exclusively performed by means of "V" closing valve.

On the other hand, if none of pumps (5, 7) is activated and vent element 31, preferably a vent valve 31, is in the open operating configuration, the storage container empties, thus filling hydraulic recovery circuit "C" until the level of liquid in container 3 is equal to that of sump 21.

Said at least one vent element, for example a vent valve 31, in the closed operating configuration, ensures that storage container 3 is prevented from filling with liquid, as already mentioned above.

Furthermore, the vent element 31, for example a vent valve 31, in the closed operating configuration, if it contains liquid on the inside, does not allow the washing liquid to flow out. As a matter of fact, the pressure generated by pump 5 of hydraulic recovery circuit "C" is not able to extract the liquid from container 3.

As mentioned above, the position of vent element 31, for example a vent valve 31, in the upper portion of container 3 prevents vent element 31 itself, for example a vent valve 31, from coming into contact with the washing liquid.

As shown in the figures, the preferred embodiment of circuit "C" comprises at least one second sensor 41. Said second sensor 41 is preferably arranged in a duct that, for example, is adapted to connect sump 21 to storage container 3. Said second sensor 41 is adapted to detect the functioning state of pump 5. Said second sensor 41, furthermore, is adapted to detect the level of washing liquid in sump 21. Furthermore, said second sensor 41 is adapted to detect the pressure prevailing in said duct.

As a matter of fact, the pressure prevailing in said duct can be useful to determine the correct functioning of pump 5. Said second sensor, besides determining the water level in the sump, can be adapted to detect the presence of liquid in a duct, or at least in a portion thereof, for example between sump 21 and storage container 3.

As shown in figure 3A, said second sensor 41 is connected downstream of sump 21. More in detail, said second sensor 41 is arranged downstream of said section reducing element "A".

The arrangement of the second sensor 41 allows the correct functioning of the washing pump to be detected by measuring the vacuum value generated by pump 5 close to said section reducing element "A".

Said second sensor 41 is operatively connected to the above-mentioned control system, which is not shown.

Hydraulic recovery circuit "C" for the recovery of washing liquid is adapted to be applied to a dishwasher 2.

Dishwasher 2 according to the present invention comprises a washing chamber 20; a hydraulic washing circuit "W"; a hydraulic draining circuit "S"; and at least one hydraulic recovery circuit "C" to recover washing liquid according to the present invention.

Said hydraulic washing system "W" comprises at least one spraying element 22 and a washing pump 5.

Said hydraulic draining circuit "S" comprises at least one draining pump 7 and a draining duct 71.

Washing chamber 20 is preferably made of steel, for example stainless steel.

Preferably, storage container 3 is arranged at a lower level relative to washing chamber 20, as shown in figures 2, 3A, and 3B. In this embodiment, storage container 3 is arranged in the compartment under washing chamber 20, close to the ground on which dishwasher 2 stands.

Furthermore, said container 3 is preferably arranged in parallel to sump 21, thus using the principle of the communicating vessels to fill said container 3 with washing liquid in the ways described above.

In the preferred embodiment, said vent element 31 or vent valve 31 is arranged at a level that is at least equal to the maximum level that can be reached by the liquid inside washing chamber 20.

In the preferred embodiment of dishwasher 2, hydraulic washing system "W" comprises at least one diverter assembly 6, which is adapted to direct at least one washing liquid flow towards at least one spraying element 22, such as for example an impeller. In the present preferred embodiment, which is shown in figures 2 and 3B, container 3, in the draining step, is upstream both of washing pump 5 and of a diverter assembly 6.

Dishwasher 2 preferably comprises a drying system, which is not shown, for example a condensing drying system. Preferably, storage container 3 is an integral part of said drying system and fulfills a function of temperature exchange in order to heat up the air returning to the washing tank, for example by means of convection with the hot walls of container 3. Said container 3 is connected in series to said drying system so as to fulfill the function of a tank for the recovery of hot air. In this way, container 3 recovers hot air, which is then delivered to washing chamber 2 so as to increase its temperature.

Therefore, dishwasher 2 according to the present invention is adapted to use storage container 3 also as a heat storing element for the drying function, for example by storing hot water or air.

The solution of the present invention to ensure the seal of storage container 3 does not require any particular closing force, since the vent element, for example a vent valve 31, is not in contact with dirty liquid or water. Hence, the solution of the present invention, which uses a vent element 31, such as a vent valve 31, that is electronically controlled, is much cheaper than the use of a "V" closing valve, which is normally used in the prior art.

Since the opening of vent valve 31 only has to allow air to flow by, it can have a much smaller diameter than a "V" closing valve of the prior art, thus further reducing costs.

Hydraulic recovery circuit "C" for the recovery of washing liquid according to the present invention - in particular in the preferred embodiment - permits the use of container that does not need to be designed so as to stand a high pressure, such as for example the pressure generated by pump 5.

Finally, a further advantage of hydraulic recovery circuit "C" and of dishwasher 2 itself is that circuit "C" does not require, unlike the solutions of the prior art, the presence of a hydraulic connection "F" between container 3 and washing chamber 20.

### NUMERICAL REFERENCES:

| | |
|---|---|
| Dishwasher | 2 |
| Washing chamber | 20 |
| Sump | 21 |
| Sump sensor | 210 |
| Spraying element | 22 |
| Storage container | 3 |
| Opening | 30 |
| Vent element | 31 |
| First sensor | 4 |
| Second sensor | 41 |
| Washing pump | 5 |
| Diverter assembly | 6 |
| Draining pump | 7 |
| Draining duct | 71 |
| Section reducing element | A |
| Hydraulic recovery circuit | C |
| Three- way fitting | C2 |
| Hydraulic washing circuit | W |
| Hydraulic draining circuit | S |
| Closing valve | V |
| Hydraulic connection | F |

## Claims

1. Dishwasher (2) comprising;
- a washing chamber (20);
- a washing system (W) comprising at least one spraying element (22) and a washing pump (5);
- a draining circuit (S) comprising at least one draining pump (7);
- a hydraulic recovery circuit (C) for recovering the washing liquid of the dishwasher, said hydraulic recovery circuit (C) comprising:
- at least one storage container (3), for containing the washing liquid recovered and comprising at least one opening (30), through which the liquid flows into our out of the container (3) itself; whereby
downstream of said pump (5) a hydraulic washing circuit (W) of said dishwasher is connected;
said pump (5) being for leading the liquid contained into said at least one container (3), thus at least partially emptying it, towards said hydraulic washing circuit (W), during a draining step of the hydraulic recovery circuit (C);
the hydraulic recovery circuit (C) being hydraulically connected to said at least one opening (30) of the storage container (3) by means of a duct: whereby
said hydraulic recovery circuit (C), is hydraulically connected to at least one sump (21), where the washing liquid to be recovered arrives; whereby
- said at least one container (3) hydraulically directly connected to said sump (21) so as to collect and contain the liquid coming from said sump (21) ; during a loading step performed to storage container (3), load the the container (3) itself hydraulically connected downstream of said sump (21) so as collect and contain the liquid coming from said sump (21) whereby
- said at least one container (3) is hydraulically connected upstream of the pump (5), so as to allow the container (3) to be at least partially emptied using the pump (5) itself;
the hydraulic recovery circuit (C) **characterized in that**:
said container (3) comprises at least one vent valve (31), which is electronically controlled;
said vent valve (31), in a first open operating configuration, allowing said container (3) to be at least partially filled and emptied and, in a closed operating configuration, preventing the container (3) itself from being emptied and filled.

2. Dishwasher according to claim 1, wherein said vent valve (31), in use, is connected to the upper end of the container (3) itself.

3. Dishwasher according to any of the previous claims, wherein at least one first sensor (4) is provided, for detecting the presence of liquid in the container (3).

4. Dishwasher according to claim 3, wherein said first sensor (4) is a pressure sensor.

5. Dishwasher according to claim 1, wherein the container (3) is arranged in parallel to the sump (21), using the principle of the communicating vessels, to fill the container (3) itself.

6. Dishwasher according to claim 3, wherein at least one second sensor (41) is provided, for detecting the functioning state of the washing pump and/or the level of water in the sump (21).

7. Dishwasher according to claim 6, wherein said second sensor (41) is connected downstream of the sump (21) and downstream of a section reducing element (A).

8. Dishwasher according to claim 1, wherein the container (3) is arranged at a lower level with respect to the washing chamber (20) and in parallel, for the principle of the communicating vessels, to the sump (21).

9. Dishwasher according to claim 1, wherein a drying system is provided;
said drying system comprises said storage container (3).

10. Dishwasher according to claim 9, wherein said container (3) is an integral part of said drying system and fulfills a function of temperature exchange for heating the air returning into the washing tank.

11. Dishwasher according to any of the previous claims, wherein said vent valve (31) is connected at a level that is at least equal to the maximum level that can be reached by the liquid inside the washing chamber (20).

## Patentansprüche

1. Geschirrspüler (2) aufweisend:
- eine Waschkammer (20);
- ein Waschsystem (W), aufweisend zumindest ein Sprühelement (22) und eine Waschpumpe (5);
- einen Drainagekreislauf (S), aufweisend zumindest eine Drainagepumpe (7);
- einen hydraulischen Rückgewinnungskreislauf (C) zum Rückgewinnen der Waschflüssigkeit des Geschirrspülers, wobei der hydraulische Rückgewinnungskreislauf (C) aufweist:
- zumindest einen Vorratsbehälter (3) zum Auffangen der rückgewonnenen Waschflüssigkeit und aufweisend zumindest eine Öffnung (30), durch welche die Flüssigkeit in den oder aus dem Behälter (3) fließt;
- wobei stromabwärts der Pumpe (5) ein hydraulischer Waschkreislauf (W) des Geschirrspülers verbunden ist;
wobei die Pumpe (5) zum Führen der aufgefangenen Flüssigkeit in dem zumindest einen Behälter (3), der dadurch zumindest teilweise entleert wird, hin zum hydraulischen Waschkreislauf (W) vorgesehen ist, während eines Entleerungsschritts des hydraulischen Rückgewinnungskreislaufs (C);
wobei der hydraulische Rückgewinnungskreislauf (C) hydraulisch mit der zumindest einen Öffnung (30) des Vorratsbehälters (3) mittels einer Leitung verbunden ist,
wobei der hydraulische Rückgewinnungskreislauf (C) mit zumindest einer Wanne (21) hydraulisch verbunden ist, wo die zurückzugewinnende Waschflüssigkeit ankommt, wobei
- der zumindest eine Behälter (3) hydraulisch direkt mit der Wanne (21) verbunden ist, um somit die von der Wanne (21) kommende Flüssigkeit zu sammeln und aufzufangen; wobei, während einem Ladeschritt zum Laden des Vorratsbehälters (3), der Behälter stromabwärts der Wanne (21) hydraulisch verbunden ist, um somit die von der Wanne (21) kommende Flüssigkeit zu sammeln und aufzufangen, wobei
- der zumindest eine Behälter (3) stromaufwärts der Pumpe (5) hydraulisch verbunden ist, um somit zu erlauben, dass der Behälter (3) unter Verwendung der Pumpe (5) zumindest teilweise entleert wird; wobei der hydraulische Rückgewinnungskreislauf (C) **dadurch gekennzeichnet ist, dass**:
der Behälter (3) zumindest ein Entlüftungsventil (31) aufweist, welches elektronisch gesteuert wird;
wobei das Entlüftungsventil (31) in einer ersten offenen Betriebskonfiguration dem Behälter (3) erlaubt, zumindest teilweise gefüllt und entleert zu werden und in einer geschlossenen Betriebskonfiguration den Behälter (3) davor bewahrt, entleert und gefüllt zu werden.

2. Geschirrspüler nach Anspruch 1, wobei das Entlüftungsventil (31), wenn es sich im Betrieb befindet, mit dem oberen Ende des Behälters (3) verbunden ist.

3. Geschirrspüler nach einem der vorhergehenden Ansprüche, wobei zumindest ein erster Sensor (4) vorgesehen ist, um die Anwesenheit von Flüssigkeit in dem Behälter (3) zu erfassen.

4. Geschirrspüler nach Anspruch 3, wobei der erste Sensor (4) ein Drucksensor ist.

5. Geschirrspüler nach Anspruch 1, wobei der Behälter (3) parallel zu der Wanne (21) angeordnet ist und das Prinzip der kommunizierenden Gefäße verwendet wird, um den Behälter (3) zu füllen.

6. Geschirrspüler nach Anspruch 3, wobei zumindest ein zweiter Sensor (41) vorgesehen ist, um den funktionierenden Zustand der Waschpumpe und/oder den Wasserstand in der Wanne (21) zu erfassen.

7. Geschirrspüler nach Anspruch 6, wobei der zweite Sensor (41) stromabwärts der Wanne (21) und stromabwärts eines Abschnitts-Reduktionselements (A) verbunden ist.

8. Geschirrspüler nach Anspruch 1, wobei der Behälter (3) relativ zur Waschkammer (20) auf einer geringeren Höhe und, für das Prinzip der kommunizierenden Gefäße, parallel zur Wanne (21) angeordnet ist.

9. Geschirrspüler nach Anspruch 1, wobei ein Trocknungssystem vorgesehen ist; wobei das Trocknungssystem den Vorratsbehälter (3) aufweist.

10. Geschirrspüler nach Anspruch 9, wobei der Behälter (3) ein integraler Bestandteil des Trocknungssystems ist und eine Funktion eines Temperaturaustauschs zum Erwärmen der Luft, die in den Waschtank zurückkehrt, erfüllt.

11. Geschirrspüler nach einem der vorhergehenden Ansprüche, wobei das Entlüftungsventil (31) in einer Höhe verbunden ist, die zumindest genauso groß ist, wie der Maximalpegel, der von der Flüssigkeit im Inneren der Waschkammer erreicht werden kann (20).

## Revendications

1. Lave-vaisselle (2), comprenant :
- une chambre de lavage (20) ;
- un système de lavage (W) comprenant au moins un élément de pulvérisation (22) et une pompe de lavage (5) ;
- un circuit de drainage (S) comprenant au moins une pompe de drainage (7) ;
- un circuit de récupération hydraulique (C) pour récupérer le liquide de lavage du lave-vaisselle, ledit circuit de récupération hydraulique (C) comprenant :
- au moins un contenant de stockage (3), pour contenir le liquide de lavage récupéré et comprenant au moins une ouverture (30), à travers laquelle le liquide s'écoule dans le contenant (3) lui-même, ou hors de celui-ci ; moyennant quoi
en aval de ladite pompe (5), un circuit de lavage hydraulique (W) dudit lave-vaisselle est raccordé ; ladite pompe (5) étant destinée à conduire le liquide contenu dans ledit au moins un contenant (3), le vidant ainsi au moins partiellement, vers ledit circuit de lavage hydraulique (W), durant une étape de drainage du circuit de récupération hydraulique (C) ;
le circuit de récupération hydraulique (C) étant hydrauliquement raccordé à ladite au moins une ouverture (30) du contenant de stockage (3) au moyen d'une conduite ; moyennant quoi
ledit circuit de récupération hydraulique (C) est hydrauliquement raccordé à au moins une cuve collectrice (21), où le liquide de lavage destiné à être récupéré arrive ; moyennant quoi
- ledit au moins un contenant (3) est hydrauliquement raccordé directement à ladite cuve collectrice (21) afin de collecter et de contenir le liquide provenant de ladite cuve collectrice (21) ; durant une étape de chargement effectuée pour charger le contenant de stockage (3), le contenant (3) lui-même étant hydrauliquement raccordé en aval de ladite cuve collectrice (21) afin de collecter et de contenir le liquide provenant de ladite cuve collectrice (21), moyennant quoi
ledit au moins un contenant (3) est hydrauliquement raccordé en amont de la pompe (5), afin de permettre au contenant (3) d'être au moins partiellement vidé en utilisant la pompe (5) elle-même ;
le circuit de récupération hydraulique (C) étant **caractérisé en ce que** :
ledit contenant (3) comprend au moins une valve de ventilation (31), qui est électroniquement commandée ;
ladite valve de ventilation (31), dans une première configuration de fonctionnement ouverte, permettant audit contenant (3) d'être au moins partiellement rempli et vidé et, dans une configuration de fonctionnement fermée, empêchant le contenant (3) lui-même d'être vidé et rempli.

2. Lave-vaisselle selon la revendication 1, dans lequel ladite valve de ventilation (31), durant l'utilisation, est raccordée à l'extrémité supérieure du contenant (3) lui-même.

3. Lave-vaisselle selon l'une quelconque des revendications précédentes, dans lequel au moins un premier capteur (4) est prévu, pour détecter la présence de liquide dans le contenant (3).

4. Lave-vaisselle selon la revendication 3, dans lequel ledit premier capteur (4) est un capteur de pression.

5. Lave-vaisselle selon la revendication 1, dans lequel le contenant (3) est agencé en parallèle à la cuve collectrice (21), en utilisant le principe des vases communicants, pour remplir le contenant (3) lui-même.

6. Lave-vaisselle selon la revendication 3, dans lequel au moins un second capteur (41) est prévu, pour détecter l'état de fonctionnement de la pompe de lavage et/ou le niveau d'eau dans la cuve collectrice (21).

7. Lave-vaisselle selon la revendication 6, dans lequel ledit second capteur (41) est raccordé en aval de la cuve collectrice (21) et en aval d'un élément réducteur de section (A).

8. Lave-vaisselle selon la revendication 1, dans lequel le contenant (3) est agencé à un niveau plus bas par rapport à la chambre de lavage (20) et en parallèle, pour le principe des vases communicants, à la cuve collectrice (21).

9. Lave-vaisselle selon la revendication 1, dans lequel un système de séchage est prévu ; ledit système de séchage comprend ledit contenant de stockage (3).

10. Lave-vaisselle selon la revendication 9, dans lequel ledit contenant (3) est une partie intégrante dudit système de séchage, et remplit une fonction d'échange de température pour chauffer l'air retournant dans le réservoir de lavage.

11. Lave-vaisselle selon l'une quelconque des revendications précédentes, dans lequel ladite valve de ventilation (31) est raccordée à un niveau qui est au moins égal au niveau maximum qui peut être atteint par le liquide à l'intérieur de la chambre de lavage (20).
